# EUROPÄISCHE PATENTSCHRIFT

(11) **EP 2 191 530 B1**
(45) Veröffentlichungstag und Bekanntmachung des Hinweises auf die Patenterteilung: **12.12.2012**
(21) Anmeldenummer: 08832294.6
(22) Anmeldetag: 29.08.2008
(51) Int. Cl.: H01M 8/04, F24F 6/00, F24F 13/20

(54) **BEFEUCHTER**
HUMIDIFIER
HUMIDIFICATEUR

(30) Priorität: 12.09.2007 DE 102007043330
(43) Veröffentlichungstag der Anmeldung: 02.06.2010
(73) Patentinhaber: Carl Freudenberg KG, 69469 Weinheim (DE)
(72) Erfinder: KAMMANN, Andreas, 69123 Heidelberg (DE); EPING, Udo, 64297 Darmstadt (DE); ALTMUELLER, Bernd, 69488 Birkenau (DE)
(86) Internationale Anmeldenummer: PCT/EP2008/007068
(87) Internationale Veröffentlichungsnummer: WO 2009/036872

(56) Entgegenhaltungen:
- WO-A-2007/020107
- WO-A-2007/028572
- JP-A- 2003 065 566
- JP-A- 2003 161 473
- DATABASE WPI Week 200326 Thomson Scientific, London, GB; AN 2003-261797 XP002517406 & JP 2003 065566 A (HONDA MOTOR CO LTD) 5. März 2003 (2003-03-05)
- DATABASE WPI Week 200345 Thomson Scientific, London, GB; AN 2003-476223 XP002517407 & JP 2003 161473 A (YOU CAN KK) 6. Juni 2003 (2003-06-06)

## Beschreibung

### Technisches Gebiet

Die Erfindung betrifft einen Befeuchter, umfassend ein Gehäuse zur Aufnahme eines Befeuchtermoduls, wobei das Befeuchtermodul Austauschkörper umfasst, die an beiden Stirnseiten durch eine Vergussmasse fixiert sind.

### Stand der Technik

Derartige Befeuchter sind aus der WO 2007/020107 A1 bekannt und finden in Brennstoffzellen, insbesondere PEM-Brennstoffzellen ihre Verwendung. Diese Brennstoffzellen benötigen für den Betrieb befeuchtete Luft, um ein Austrocknen der Brennstoffzellen-Membran zu verhindern. Das Gehäuse der Befeuchter weist eine runde oder rechteckige Grundform auf und ist an beiden Stirnseiten jeweils durch einen Deckel verschlossen. Innerhalb des Gehäuses sind Austauschkörper, häufig Hohlfasern, angeordnet. Die Grenzflächen der Austauschkörper werden von einer Seite von feuchter Luft und von der anderen von zu befeuchtender Luft umströmt und durch die Austauschkörper erfolgt ein Stoffaustausch. Für einen effektiven Stoffaustausch ist es erforderlich, dass es keinen unmittelbaren Kontakt der beiden Luftströme und keinen Kontakt zur Umgebungsluft gibt. Dazu sind in dem Gehäuse Dichtungen angeordnet, die die Luftströme voneinander und gegenüber der Umgebung abdichten. Bei der Abdichtung des Befeuchters ist es problematisch, dass das Gehäuse und das Befeuchtermodul unterschiedliche Wärmeausdehnungskoeffizienten aufweisen und dass das Befeuchtermodul empfindlich gegenüber mechanischer Beanspruchung ist.

### Darstellung der Erfindung

Der Erfindung liegt die Aufgabe zugrunde, den Befeuchter so weiter zu entwickeln, dass die Einbindung des Befeuchtermoduls in das Gehäuse verbessert ist.

Diese Aufgabe wird mit den Merkmalen von Anspruch 1 gelöst. Auf vorteilhafte Ausgestaltungen nehmen die Unteransprüche Bezug.
Zur Lösung der Aufgabe ist das Befeuchtermodul an zumindest einer Stirnseite, d.h. optional auch an beiden Strinseiten, formschlüssig im Gehäuse gehalten, dadurch dass das Gehäuse an den Innenumfangsflächen Ausnehmungen aufweist, in die sich die Vergussmasse des Befeuchtermoduls erstreckt. Durch die formschlüssige Anbindung des Befeuchtermoduls in das Gehäuse ist das Befeuchtermodul sicher gehalten, wobei die Anbindung dabei so erfolgen kann, dass das Befeuchtermodul radial und axial spannungsfrei fixiert ist. Die Abdichtung erfolgt durch ein zusätzliches Dichtelement, welches das Befeuchtermodul in radialer und axialer Richtung flexibel dichtend umschließt und so die Stoffströme sicher voneinander und gegenüber der Umgebung trennt. Dabei ist die Dichtung so ausgelegt, dass die zwischen den Stoffströmen auftretenden Druckdifferenzen bis 1,5 bar und gegenüber den Umgebung auftretenden Druckdifferenzen bis 5 bar sicher abgedichtet werden. Die Austauschkörper bestehen vorzugsweise aus Hohlfasern, die als Bündel in dem Gehäuse angeordnet sind und an beiden Stirnseiten durch eine Vergussmasse miteinander verbunden sind. Die Vergussmasse verschließt die Zwischenräume zwischen den Fasern, so dass ein über die Stirnseite der Austauschkörper eintretender Luftstrom nur durch die Hohlfasern strömen kann. Die Vergussmasse besteht vorzugsweise aus einem Kunstharz, beispielsweise Epoxydharz. Zur Herstellung des Befeuchters werden die Hohlfasern in dem Gehäuse angeordnet und danach erfolgt das Verbinden der Hohlfasern direkt in dem Gehäuse. Dadurch kann sich das Befeuchtermodul jeder Gehäuseform anpassen. Für den Formschluss sind in dem Gehäuse Vertiefungen, Hinterschnitte oder Erhebungen ausgebildet, Diese werden von der Vergussmasse ausgefüllt oder umschlossen. Der Formschluss ist daher besonders einfach herstellbar und das Befeuchtermodul ist sicher im Gehäuse gehalten. Aufgrund des herstellungsbedingten Schrumpfens und der unterschiedlichen Wärmeausdehnungskoeffizienten verbleibt zwischen Gehäuse und Befeuchtermodul ein Spalt, der durch die Dichtung abgedichtet wird. Durch den Spalt ergibt sich gleichzeitig ein Spiel, der das spannungsfreie Lagern des Befeuchtermoduls ermöglicht.

Das Befeuchtermodul kann an beiden Stirnseiten formschlüssig im Gehäuse gehalten sein. Dabei sind im Bereich der beiden Stirnseiten am Innenumfang des Gehäuses Vertiefungen, Hinterschnitte oder Erhebungen vorgesehen. Diese müssen so ausgestaltet sein, dass das Befeuchtermodul zwar in allen Raumrichtungen lagefixiert und mittenzentriert ist, jedoch ein spannungsfreier Ausgleich von wärme- oder herstellungsbedingter Ausdehnung oder Schrumpfung möglich ist-Bei der beidseitigen formschlüssigen Fixierung ist vorteilhaft, dass die Dichtungen, die an den beiden Stirnseiten angeordnet sind, keine statischen Lasten zu tragen haben, so dass diese für optimale Dichtheit optimiert sein können.

Das Gehäuse weist an den Innenumfangsflächen Ausnehmungen auf, in die sich die Vergussmasse des Befeuchtermoduls erstreckt. Ausnehmungen sind besonders einfach herstellbar und verkleinern nicht den wirksamen Querschnitt des Gehäuses.
Das Gehäuse ist vorzugsweise flach ausgebildet, wobei die Ausnehmungen an den breiten Innenumfangsflächen jeweils durch eine in Umfangsrichtung verlaufende Nut und an den schmalen Innenumfangsflächen jeweils durch eine mittig angeordnete Vertiefung gebildet sein können. Unter flach ist ein rechteckig oder flachoval ausgebildetes Gehäuse zu verstehen. Ein rechteckig oder flachoval ausgebildeter Befeuchter ermöglicht eine Platz sparende Montage. Durch die an den breiten Seiten angeordnete Nut und die an den schmalen Seiten angeordnete Vertiefung ist das Befeuchtermodul in dem Gehäuse zentriert gelagert.

Die Nuten können jeweils durch einen mittig angeordneten Steg unterbrochen sein. Der Steg fungiert als Anschlag und begrenzt den Freiweg des Befeuchtermoduls. Der Steg verringert ferner die wirksame Länge die der Vergussmasse beim Schwinden zur Verfügung steht. Demnach verringert sich durch den Steg das Spiel nach dem Aushärten der Vergussmasse.

Die Innenumfangsflächen können mit einer Beschichtung versehen sein. Die Beschichtung verhindert, dass sich die Vergussmasse bei der Herstellung stoffschlüssig mit dem Gehäuse verbindet. Dazu kann die Beschichtung beispielsweise PTFE enthalten.

Die Vergussmasse kann über die Stirnseiten des Gehäuses hinausragen. Das ermöglicht ein einfaches Abdichten des Befeuchtermoduls bei gleichzeitiger Bewegungsfreiheit des Befeuchtermoduls in axialer Richtung. Die Dichtung kann die herausragende Umfangsfläche des Befeuchtermoduls dichtend umschließen und auf dieser auch Gleiten.

Beide Stirnseiten des Gehäuses können durch einen Deckel verschlossen sein und zwischen Gehäuse und Deckel kann jeweils eine Flachdichtung angeordnet sein. In die Deckel sind die Anschlüsse für den Ein- und Austritt der beiden Luftströme integriert. Die Flachdichtung dichtet einerseits die beiden Luftströme gegenüber der Umgebung ab und andererseits liegt sie auch an dem Befeuchtermodul an, so dass sie auch die beiden Luftströme voneinander trennt.

Die Flachdichtung kann eine umlaufende Dichtlippe aufweisen, die das Befeuchtermodul dichtend umschließt. Die Dichtlippe liegt mit radialer Vorspannung an der Umfangsfläche des Befeuchtermoduls an und ermöglicht eine Bewegung des Befeuchtermoduls in axialer Richtung. Je nach Länge der Dichtlippe ist auch eine Bewegung des Befeuchtermoduls in radialer Richtung möglich. Dadurch ist ein Ausgleich des variierenden Spiels möglich, welches sich durch unterschiedliche Temperaturausdehungskoeffizienten ergibt.

Die Flachdichtung kann formschlüssig im Gehäuse gehalten sein. Dadurch kann die Flachdichtung an dem Gehäuse einfach positioniert werden und es vereinfacht sich die Montage. Die Flachdichtung kann an beiden Stirnseiten zumindest eine umlaufende Erhebung aufweisen. Die Erhebungen erhöhen lokal die Flächenpressung und verbessern die Dichtwirkung

### Kurzbeschreibung der Zeichnung

Einige Ausführungsbeispiele des erfindungsgemäßen Befeuchters werden durch die nachfolgenden Figuren näher erläutert. Diese zeigen, jeweils schematisch:
Fig. 1 einen Befeuchter im Längsschnitt;
Fig. 2 im Detail eine Stirnseite des Gehäuse in perspektivischer Ansicht.

### Ausführung der Erfindung

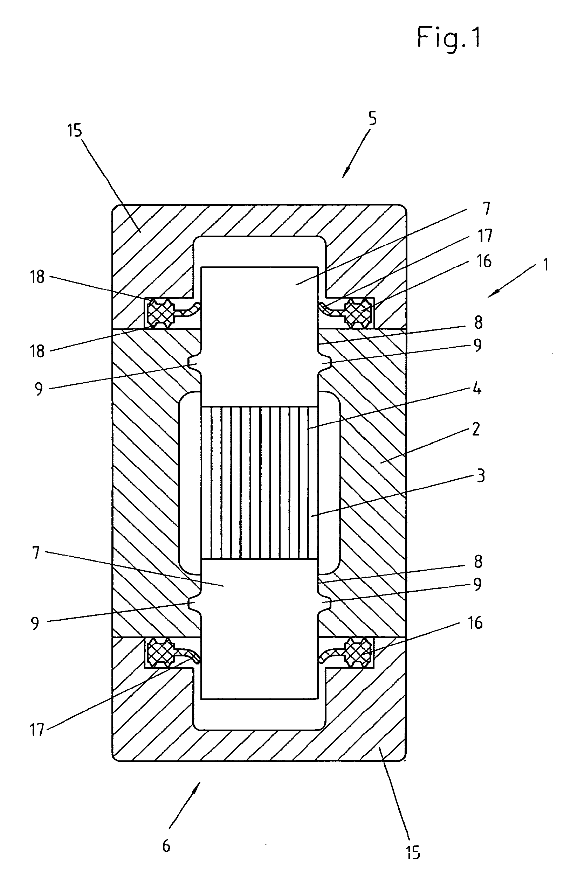

Figur 1 zeigt einen Befeuchter 1, der ein Gehäuse 2 mit einem rechteckigen Querschnitt. Innerhalb des Gehäuses 2 ist ein Befeuchtermodul 3 angeordnet. Das Befeuchtermodul besteht aus einer Vielzahl von Austauschkörpern 4, die aus Hohlfasern gebildet sind. Die Austauschkörper 4 sind an beiden Stirnseiten 5, 6 durch eine aus Kunstharz bestehende Vergussmasse 7 fixiert sind, so dass die Zwischenräume zwischen den Austauschkörpern 4 verfüllt sind. Das Gehäuse 2 weist an beiden Stirnseiten 5, 6 an den Innenumfangsflächen 8 Ausnehmungen 9 auf. In diese Ausnehmungen 9 erstreckt sich die Vergussmasse 7 und fixiert so das Befeuchtermodul 3 beidseitig formschlüssig im Gehäuse 2. Die Innenumfangsflächen 8 mit den Ausnehmungen 9 sind mit einer Beschichtung versehen, um eine stoffschlüssige Verbindung von Gehäuse 2 und Befeuchtermodul 3 zu verhindern. Das Befeuchtermodul 3 weist eine größere axiale Erstreckung als das Gehäuse 2 auf, so dass die Vergussmasse über die Stirnseiten 5, 6 des Gehäuses 2 hinausragt. Die beiden Stirnseiten 5, 6 des Gehäuses 2 sind jeweils durch einen Deckel 15 verschlossen, wobei zwischen Gehäuse 2 und Deckel 15 jeweils eine Flachdichtung 16 angeordnet ist. Diese Flachdichtung 16 ist wegen der besseren Stabilität ein Elastomer-Metall-Verbundteil. Die Flachdichtung 16 weist eine umlaufende Dichtlippe 17 auf, die unter radialer Vorspannung dichtend am Außenumfang der Vergussmasse 7 des Befeuchtermoduls 3 anliegt und diese umschließt. Des Weiteren ist die Flachdichtung 16 an beiden Stirnseiten mit jeweils zwei umlaufenden Erhebungen 18 versehen.

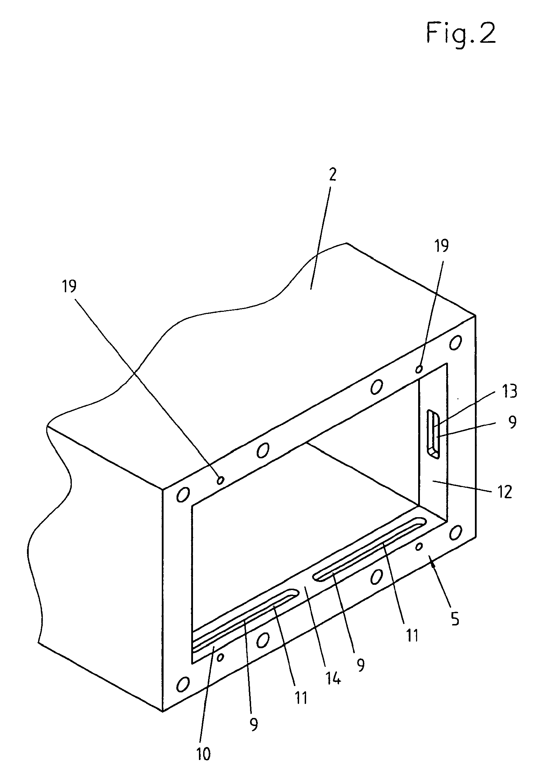

Figur 2 zeigt im Detail das Gehäuse 2 eines Befeuchters gemäß Figur 1 in perspektivischer Ansicht. Gemäß Figur 2 ist das Gehäuse 2 flach-rechteckig ausgebildet. Die Ausnehmungen 9 sind an den beiden breiten Innenumfangsflächen 10 jeweils durch eine in Umfangsrichtung verlaufende Nut 11 und an den beiden schmalen Innenumfangsflächen 12 jeweils durch eine mittig angeordnete Vertiefung 13 gebildet. Die Nuten 11 sind jeweils durch einen mittig angeordneten Steg 14 unterbrochen. An den Stirnseiten 5, 6 des Gehäuses 2 sind Bohrungen 19 angebracht. Diese Bohrungen 19 werden Stifte eingesteckt, durch die die Flachdichtung 16 zur Vereinfachung der Montage formschlüssig im Gehäuse 2 gehalten werden kann.

## Patentansprüche

1. Befeuchter (1), umfassend ein Gehäuse (2) zur Aufnahme eines Befeuchtermoduls (3), wobei das Befeuchtermodul (3) Austauschkörper (4) umfasst, die an beiden Stirnseiten (5, 6) durch eine Vergussmasse (7) fixiert sind, wobei das Befeuchtermodul (3) an zumindest einer Stirnseite (5, 6) formschlüssig im Gehäuse (2) gehalten ist, **dadurch gekennzeichnet, dass** das Gehäuse (2) an den Innenumfangsflächen (8) Ausnehmungen (9) aufweist, in die sich die Vergussmasse (7) des Befeuchtermoduls (3) erstreckt.

2. Befeuchter nach Anspruch 1, **dadurch gekennzeichnet, dass** das Gehäuse (2) flach ausgebildet ist und die Ausnehmungen (9) an den breiten Innenumfangsflächen (10) jeweils durch eine in Umfangsrichtung verlaufende Nut (11) und an den schmalen Innenumfangsflächen (12) jeweils durch eine mittig angeordnete Vertiefung (13) gebildet ist.

3. Befeuchter nach Anspruch 2, **dadurch gekennzeichnet, dass** die Nuten (11) jeweils durch einen mittig angeordneten Steg (14) unterbrochen sind.

4. Befeuchter nach einem der vorhergehenden Ansprüche, **dadurch gekennzeichnet, dass** die Innenumfangsflächen (10) mit einer Beschichtung versehen sind.

5. Befeuchter nach einem der vorhergehenden Ansprüche, **dadurch gekennzeichnet, dass** die Vergussmasse (7) über die Stirnseiten des Gehäuse (2) hinausragt.

6. Befeuchter nach einem der vorhergehenden Ansprüche, **dadurch gekennzeichnet, dass** beide Stirnseiten (5, 6) des Gehäuses (2) durch einen Deckel (15) verschlossen sind und zwischen Gehäuse (2) und Deckel (15) jeweils eine Flachdichtung (16) angeordnet ist.

7. Befeuchter nach Anspruch 6, **dadurch gekennzeichnet, dass** die Flachdichtung (16) eine umlaufende Dichtlippe (17) aufweist, die das Befeuchtermodul (3) dichtend umschließt.

8. Befeuchter nach Anspruch 6 oder 7, **dadurch gekennzeichnet, dass** die Flachdichtung (16) formschlüssig im Gehäuse (2) gehalten ist.

9. Befeuchter nach einem der Ansprüche 6 bis 8, **dadurch gekennzeichnet, dass** die Flachdichtung (16) an beiden Stirnseiten zumindest eine umlaufende Erhebung (18) aufweist.

## Claims

1. Humidifier (1), comprising a housing (2) for receiving a humidifier module (3), the humidifier module (3) comprising exchange bodies (4) which are fixed to both end faces (5, 6) by means of a casting compound (7), the humidifier module (3) being held positively, on at least one end face (5, 6), in the housing (2), **characterized in that** the housing (2) has, on the inner circumferential surfaces (8), recesses (9) into which the casting compound (7) of the humidifier module (3) extends.

2. Humidifier according to Claim 1, **characterized in that** the housing (2) is a flat form, and the recesses (9) are formed on the wide inner circumferential surfaces (10) in each case by a groove (11) running in the circumferential direction and on the narrow inner circumferential surfaces (12) in each case by a centrally arranged depression (13).

3. Humidifier according to Claim 2, **characterized in that** the grooves (11) are interrupted in each case by a centrally arranged web (14).

4. Humidifier according to one of the preceding claims, **characterized in that** the inner circumferential surfaces (10) are provided with a coating.

5. Humidifier according to one of the preceding claims, **characterized in that** the casting compound (7) projects beyond the end faces of the housing (2).

6. Humidifier according to one of the preceding claims, **characterized in that** the two end faces (5, 6) of the housing (2) are closed by means of a cover (15) and in each case a flat seal (16) is arranged between the housing (2) and cover (15).

7. Humidifier according to Claim 6, **characterized in that** the flat seal (16) has a peripheral sealing lip (17) which sealingly surrounds the humidifier module (3).

8. Humidifier according to Claim 6 or 7, **characterized in that** the flat seal (16) is held positively in the housing (2).

9. Humidifier according to one of Claims 6 to 8, **characterized in that** the flat seal (16) has at least one peripheral elevation (18) on both end faces.

## Revendications

1. Humidificateur (1), comprenant un boîtier (2) pour recevoir un module d'humidificateur (3), le module d'humidificateur (3) comprenant des corps d'échange (4) qui sont fixés aux deux côtés frontaux (5, 6) par une masse de scellement (7), le module d'humidificateur (3) étant maintenu au niveau d'au moins un côté frontal (5, 6) par engagement par correspondance géométrique dans le boîtier (2), **caractérisé en ce que** le boîtier (2) présente au niveau des surfaces périphériques internes (8) des évidements (9) dans lesquels s'étend la masse de scellement (7) du module d'humidificateur (3).

2. Humidificateur selon la revendication 1, **caractérisé en ce que** le boîtier (2) est réalisé sous forme plate et les évidements (9) sont formés au niveau des surfaces périphériques internes larges (10) à chaque fois par une rainure (11) s'étendant dans la direction périphérique et au niveau des surfaces périphériques internes étroites (12) à chaque fois par un renfoncement (13) disposé centralement.

3. Humidificateur selon la revendication 2, **caractérisé en ce que** les rainures (11) sont à chaque fois interrompues par une nervure (14) disposée centralement.

4. Humidificateur selon l'une quelconque des revendications précédentes, **caractérisé en ce que** les surfaces périphériques internes (10) sont pourvues d'un revêtement.

5. Humidificateur selon l'une quelconque des revendications précédentes, **caractérisé en ce que** la masse de scellement (7) fait saillie au-delà des côtés frontaux du boîtier (2).

6. Humidificateur selon l'une quelconque des revendications précédentes, **caractérisé en ce que** les deux côtés frontaux (5, 6) du boîtier (2) sont fermés par un couvercle (15) et à chaque fois une garniture d'étanchéité plate (16) est disposée entre le boîtier (2) et le couvercle (15).

7. Humidificateur selon la revendication 6, **caractérisé en ce que** la garniture d'étanchéité plate (16) présente une lèvre d'étanchéité périphérique (17) qui entoure de manière hermétique le module d'humidificateur (3).

8. Humidificateur selon la revendication 6 ou 7, **caractérisé en ce que** la garniture d'étanchéité (16) est maintenue par engagement par correspondance géométrique dans le boîtier (2).

9. Humidificateur selon l'une quelconque des revendications 6 à 8, **caractérisé en ce que** la garniture d'étanchéité (16) présente, au niveau des deux côtés frontaux, au moins un rehaussement périphérique (18).
